# EUROPEAN PATENT APPLICATION

(11) **EP 1 471 515 A1**
(43) Date of publication of application: **27.10.2004**
(21) Application number: 03701804.1
(22) Date of filing: 20.01.2003
(51) Int. Cl.: G11B 7/24, G11B 7/26

(54) **DISC-SHAPED OPTICAL RECORDING MEDIUM AND REPRODUCTION LIMIT METHOD THEREOF**

(30) Priority: 23.01.2002 JP 2002014660
(71) Applicant: Sony Corporation, Tokyo 141-0001 (JP)
(72) Inventor: IWAMURA, Takashi c/o SONY CORPORATION, Shinagawa-ku, Tokyo 141-0001 (JP); SABI, Yuichi2c/o SONY CORPORATION, Shinagawa-ku, Tokyo 141-0001 (JP)
(74) Representative: Melzer, Wolfgang, Dipl.-Ing.
(86) International application number: PCT/JP2003/000433
(87) International publication number: WO 2003/063154

(57) **Abstract**

There is provided a disk type optical recording medium and a reproduction limitation method for a disk type optical recording medium for preventing illegal copying, etc. to achieve protection of digital contents.

A CD is provided which can be reproduced on an ordinary audio CD player but whose readout is impossible at high speed on a CD-ROM drive annexed to a computer. The CD (10) has a clamp hole (14) formed at a position displaced from the central position of a disk substrate (12) with respect to an outer diameter of the disk substrate (12) to form the center of gravity of the disk substrate (12) at a position eccentric by a predetermined amount with respect to the center of rotation provided by the clamp hole. Further, a coating material (16) as a weight for the eccentricity is applied to a label face (10A) of the CD (10). Since the center of gravity and the center of rotation of the CD (10) are eccentric from each other, upon low-speed rotation, stability of rotation can be maintained without being influenced by the eccentricity. However, upon high-speed rotation, the stability of rotation cannot be maintained, resulting in failure in reproduction. Thus illegal copying or the like is prevented to achieve protection of digital contents.

## Description

### Technical Field

This invention relates to a disk type optical recording medium for which various systems can be applied such as a CD (Compact Disk) and a DVD (Digital Video Disk) and a reproduction limitation method for a disk type optical recording medium.

### Background Art

CDs, for example, for exclusive use for music information have been popularized conventionally, and various kinds of music can be reproduced using CD players for exclusive use with the CDs. In this instance, digital information of a CD reproduced by a CD player is converted as it is into an analog acoustic signal and outputted to a speaker, a tape recorder or the like.

Meanwhile, a CD-ROM or a CD-R for data processing used principally with a peripheral equipment of a computer has been provided and is used for storage or recording of data processed by a computer through various disk drives. In this instance, information of a CD-ROM or a CD-R is handled in the form of digital information.

Incidentally, with the popularization of various computers in recent years, it has become possible even for an individual to readily perform a process of loading a conventional CD for exclusive use for music into a disk drive of a computer to reproduce the CD and take digital music information recorded on the CD into the computer and then process the digital music information arbitrarily or copy it in a mass onto CD-Rs.

Besides, although it is convenient that music information of a CD can be taken out as no-miss digital data in this manner, a problem of protection of the copyright has arisen and become a significant social problem. In particular, the seriousness of this problem increases as the broadband communication of networks is promoted not only in that a CD-R including the quite same contents as those of an original CD is assigned or sold to an unrelated person, but also in that favorite music included in a CD is distributed to an unrelated person through a network.

On the other hand, CDs and CD players have been popularized widely, and it is actually impossible to change the format of them.

Particularly since the CD format is standardized in particular details so that a CD can be enjoyed without fail on all players, it is the present situation that such a radical solution as to make a digital signal carry additional information for copy prevention is impossible.

Therefore, it is an object of the present invention to provide a disk type optical recording medium and a reproduction limitation method for a disk type optical recording medium by which reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

### Disclosure of Invention

In order to attain the object described above, according to the present invention, a disk type optical recording medium wherein information tracks formed from pit trains to be read through tracking control and focusing control of an optical pickup are provided on an information recording face provided on a disk substrate is characterized in that the disk substrate has a clamp hole to be mounted on a rotary shaft of a disk rotating apparatus and has a center of gravity eccentric by a predetermined amount with respect to the center of rotation of the disk substrate provided by the clamp hole.

Further, according to the present invention, another disk type optical recording medium wherein information tracks formed from pit trains to be read through tracking control and focusing control of an optical pickup are provided on an information recording face provided on a disk substrate is characterized in that the information recording face of the disk substrate is formed with a predetermined offset in a circumferential direction of the disk substrate.

Furthermore, according to the invention, a further disk type optical recording medium wherein information tracks formed from pit trains to be read through tracking control and focusing control of an optical pickup are provided on an information recording face provided on a disk substrate is characterized in that the information recording face is formed on one face of the disk substrate and a reflecting face is provided on the outer side of the information recording face while the disk substrate is formed as a transmission layer which introduces spotlight from the optical pickup to the pit trains, and that the transmission layer of the disk substrate is formed with a film thickness which varies in a circumferential direction of the disk substrate.

Meanwhile, according to the present invention, a reproduction limitation method for a disk type optical recording medium wherein information tracks formed from pit trains to be read through tracking control and focusing control of an optical pickup are provided on an information recording face provided on a disk substrate is characterized in that the center of gravity of the disk substrate is made eccentric by a predetermined amount with respect to the center of rotation of the disk substrate such that, upon predetermined low-speed reproduction, stable rotation of the disk substrate can be assured and stable follow-up control by the optical pickup is possible whereas, upon predetermined high-speed reproduction, the rotation of the disk substrate is less stabilized to disable follow-up control by the optical pickup.

Further, according to the present invention, another reproduction limitation method for a disk type optical recording medium wherein information tracks formed from pit trains to be read through tracking control and focusing control of an optical pickup are provided on an information recording face provided on a disk substrate is characterized in that the information recording face of the disk substrate is formed with a predetermined offset in a circumferential direction of the disk substrate such that, upon predetermined low-speed reproduction, stable rotation of the disk substrate can be assured and stable follow-up control by the optical pickup is possible whereas, upon predetermined high-speed reproduction, the follow-up control by the optical pickup is disabled by the offset.

Furthermore, according to the present invention, a further reproduction limitation method for a disk type optical recording medium wherein information tracks formed from pit trains to be read through tracking control and focusing control of an optical pickup are provided on an information recording face provided on a disk substrate is characterized in that the disk substrate as a transmission layer which introduces spotlight from the optical pickup to the pit trains is formed with a film thickness which varies in a circumferential direction of the disk substrate such that, upon predetermined low-speed reproduction, stable rotation of the disk substrate can be assured and stable follow-up control by the optical pickup is possible whereas, upon predetermined high-speed reproduction, the follow-up control by the optical pickup is disabled by the variation of the film thickness of the transmission layer.

With the disk type optical recording medium according to the present invention described above, since the center of gravity and the center of rotation of the disk substrate are eccentric from each other, upon low-speed reproduction, stability of rotation can be maintained without being influenced by the eccentricity and follow-up control by the tracking control of the optical pickup is possible. However, upon high-speed reproduction of the disk type optical recording medium, the stability of the rotation cannot be maintained and the follow-up by the tracking control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the disk type optical recording medium according to the present invention, the information recording face of the disk substrate is formed with an offset in a circumferential direction of the disk substrate. Therefore, upon low-speed reproduction, focusing control of the optical pickup is possible irrespective of the existence of the offset. However, upon high-speed reproduction of the disk type optical recording medium, the influence of a sudden variation of the focal position by the offset becomes so significant that the focusing control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Further, with the disk type optical recording medium according to the present invention, since the transmission layer of the disk substrate is formed with a film thickness which varies in a circumferential direction of the disk substrate, upon low-speed reproduction, focusing control of the optical pickup is possible irrespective of the influence of the variation of the film thickness of the transmission layer. However, upon high-speed reproduction of the disk type optical recording medium, the influence of a sudden variation of the film thickness becomes so significant that the focusing control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the reproduction limitation method for a disk type optical recording medium according to the present invention, since the center of gravity and the center of rotation of the disk substrate are made eccentric from each other, upon low-speed reproduction, stability of rotation can be maintained without being influenced by the eccentricity and follow-up control by the tracking control of the optical pickup is possible. However, upon high-speed reproduction of the disk type optical recording medium, the stability of the rotation cannot be maintained and the follow-up by the tracking control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the reproduction limitation method for a disk type optical recording medium according to the present invention, the information recording face of the disk substrate is provided with an offset in a circumferential direction of the disk substrate.
Therefore, upon low-speed reproduction, focusing control of the optical pickup is possible irrespective of the existence of the offset. However, upon high-speed reproduction of the disk type optical recording medium, the influence of a sudden variation of the focal position by the offset becomes so significant that the focusing control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Further, with the reproduction limitation method for a disk type optical recording medium according to the present invention, since the transmission layer of the disk substrate is formed with a film thickness which varies in a circumferential direction of the disk substrate, upon low-speed reproduction, focusing control of the optical pickup is possible irrespective of the influence of the variation of the film thickness of the transmission layer. However, upon high-speed reproduction of the disk type optical recording medium, the influence of a sudden variation of the film thickness becomes so significant that the focusing control of the optical pickup is disabled.

Accordingly, reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

### Brief Description of Drawings

Figs. 1A and 1B are schematic views showing an eccentric structure of a CD according to a first embodiment of the present invention;
Fig. 2 is a flow chart illustrating an ordinary process of manufacturing a CD;
Figs. 3A and 3B are schematic views showing a structure of a CD according to a second embodiment of the present invention;
Fig. 4 is a diagram illustrating a relationship between a reproduction speed and a focusing servo characteristic according to general CD standards;
Fig. 5 is a diagram illustrating a sectional shape at an offset provided on a signal recording face of the CD shown in Fig. 3;
Figs. 6A to 6G are sectional views illustrating a stamper manufacturing process for manufacturing the CD shown in Fig. 3;
Figs. 7A and 7B are schematic views showing a structure of a CD according to a third embodiment of the present invention;
Fig. 8 is a diagram showing a sectional shape at an offset provided on a disk substrate of the CD shown in Fig. 7; and
Fig. 9 is a sectional view showing a molding die for manufacturing a disk substrate of the CD shown in Fig. 7.

### Best Mode for Carrying out the Invention

In the following, embodiments of a disk type optical recording medium and a reproduction limitation method for a disk type optical recording medium according to the present invention are described.

In the embodiments of the present invention, a reproduction limitation method for a CD is provided which allows reproduction on an ordinary audio CD player (reproduction apparatus for exclusive use) but does not allow readout thereof on a CD player connected to a computer, that is, on a CD-ROM drive (general purpose disk drive apparatus).

Employment of such a reproduction limitation method as just mentioned can prevent music information included in a CD from being fetched by a computer and prevent unlimited distribution through the intermediation of CD-Rs or a network thereby to achieve protection of the copyright.

The invention of the reproduction limitation method has been made with a note taken of the fact that a CD-ROM drive for a computer application rotates a CD at a speed higher by ten or more times than an audio CD player to reproduce the CD, and takes a countermeasure on a CD so that reproduction of the CD can be prevented upon such high speed rotation of the CD.

Reproduction of a CD by high speed rotation is essentially required for smooth copying of CD information, and through prevention of this, increased time is required for copying of CD information onto another medium and a suppression effect on illegal copying can be anticipated thereby.

It is to be noted that,.while, in the embodiments described below, description is given taking a CD as an example of a disk type optical recording medium, a similar method can be applied also to DVDs and other similar media.

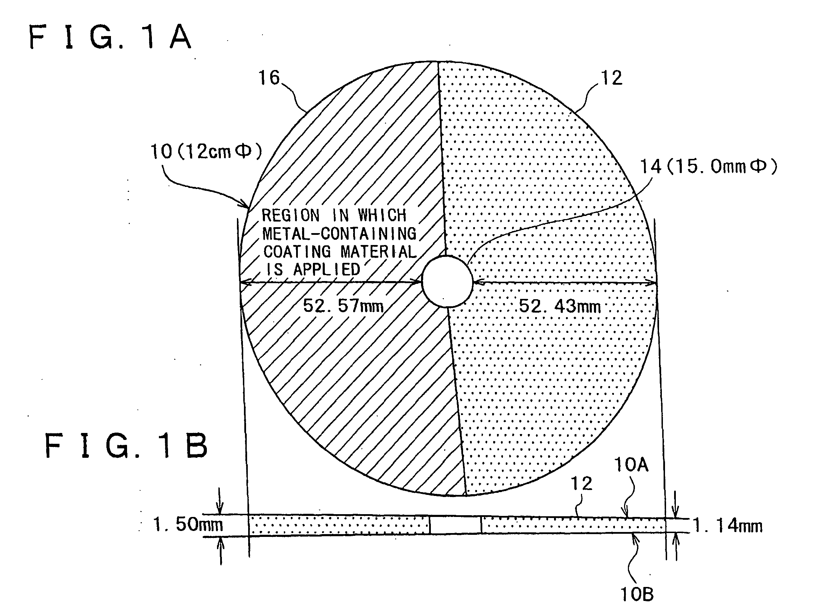

Fig. 1 is a schematic view showing an eccentric structure of a CD according to a first embodiment of the present invention, and Fig. 1A shows a plan view and Fig. 1B shows a sectional view.

The CD 10 according to the present embodiment is configured such that a clamp hole 14 is formed at a position displaced from the central position with respect to an outer diameter of a disk substrate 12 so that the. center of gravity of the disk substrate 12 is provided at a position eccentric by a predetermined amount with respect to the center of rotation provided by the clamp hole 14.

In the example shown, the diameter of the CD 10 (disk substrate 12) is 120 ± 0.3 mm, the diameter of the clamp hole 14 (center hole) is 15 mm, and the eccentricity of the clamp hole 14 is +70 µm. As shown in Fig. 1, the distance from an inner edge of the clamp hole 14 to the left end of the disk substrate 12 is 52.57 mm, and the distance to the right end is 52.43 mm.

Further, in the CD 10 of the type described, an information recording face is formed on one face of the disk substrate 12, and a reflecting face is provided on the outer side of the information recording face and a label face 10A is provided on the outer side of the reflecting face. As spotlight from an optical pickup passes through the disk substrate made of a transparent acrylic material or a like material and is reflected by a reflecting film on the information recording face such that it returns to the optical pickup side, a pit train on the information recording face is read from the returning light. In particular, the opposite side to the label face 10A is formed as a readout face 10B on which spotlight is to be illuminated.

In the CD 10 of the present embodiment, a coating material 16 is applied as a weight for the eccentricity to the label face 10A shown in Fig. 1. The coating material 16 is provided in a region of the left half of the disk substrate 12 and contains metal powder so that it may function as a weight.

The coating material 16 is applied, for example, by screen printing. As a result of the application, the thickness of the disk is 1.14 mm in the minimum and 1.50 mm in the maximum.

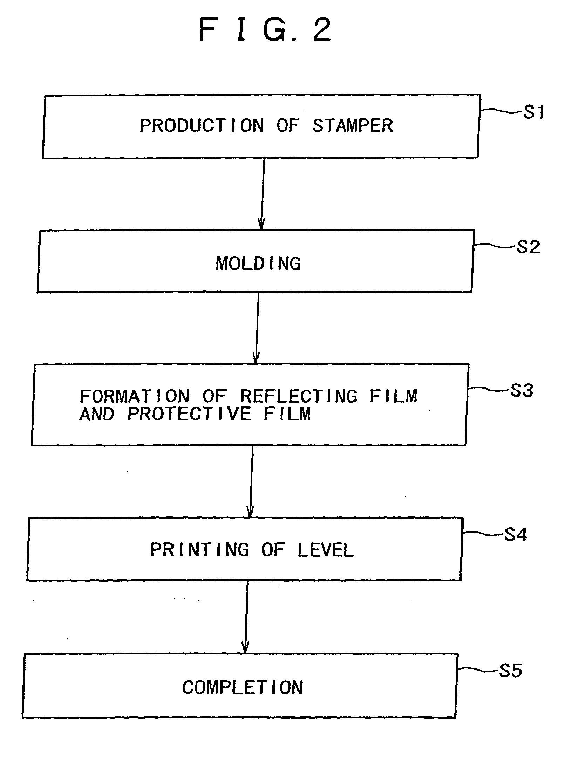

FIG. 2 is a flow chart illustrating an ordinary process of manufacturing a CD.

First, a master stamper is produced (step S1), and a disk substrate is molded using the master stamper (step S2). Then, formation of a reflecting film and formation of an overlying protective layer are performed (step S3) and printing of a label is performed (step S4), thereby completing a CD (step S5).

Thus, in the present embodiment, a disk substrate having such dimensions as seen in Fig. 1 is formed by the molding process at step S2, and the coating material 16 is applied as a weight by the label printing process at step S4.

When a CD manufactured in such a manner as described above was reproduced on an ordinary audio CD player, it was reproduced successfully without any trouble. However, when it was tried to reproduce the CD at a 20-fold speed on a CD-ROM apparatus, a balancer of a disk rotating mechanism of the CD-ROM apparatus did not follow up the CD and an error appeared, resulting in failure in reproduction of the CD.

It is to be noted that the region in which the coating material 16 is provided need not be a region just one half of the disk substrate 12 but may otherwise be part of the disk substrate 12, and also it is a possible method to adhere a weight in the form of a thin film sheet by thermal welding or the like in place of the coating material.

Further, a method other than such a method of applying the coating material 16 or adhering a weight in the form of a thin film sheet as described above may be used to make the center of gravity of the disk substrate eccentric by providing a recess in the form of a dot or a line at part of the label face 10A or providing an offset at part of the CD 10 in such a state that no influence is had on the pit train face.

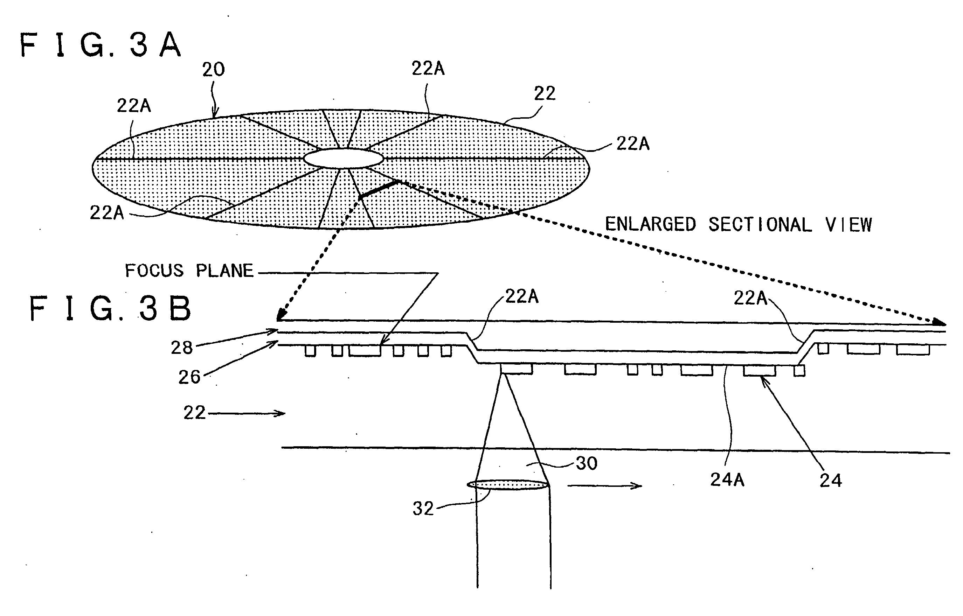

Fig. 3 is a schematic view showing a structure of a CD according to a second embodiment of the present invention, and Fig. 3A is a perspective view of an appearance of the CD and Fig. 3B is a sectional view of the CD.

The CD 20 of the present embodiment is configured such that predetermined offsets 22A are provided in a circumferential direction of a disk substrate 22 on an information recording face of the disk substrate 22.

It is.to be noted that an information recording face 24A having pit trains 24 thereon is formed on the disk substrate 22, and a reflecting film 26 and a protective layer 28 are successively formed on the information recording face 24A and a label face (not shown in FIG. 3) is formed on the protective layer 28.

The offsets 22A are formed at predetermined distances in a circumferential direction on the information recording face 24A of the disk substrate 22. Thus, the information recording face 24A is formed from two regions having a predetermined difference in height, and the pit trains 24 are formed in such a state that each of them extends across an offset 22A.

It is to be noted that each of the offsets 22A is formed in such a state that it extends radially from the center of the CD 20 toward an outer circumference side.

Since the information recording face 24A of the CD 20 having such a configuration as described above is formed from two regions having a predetermined difference in height, upon reproduction of the disk, the optical pickup operates such that the focus as viewed from the optical pickup alternately changes over like (far - near) - (near - far) - (far - near) - (near - far) every time it passes an offset 22A.

Therefore, spotlight 30 illuminated from the optical pickup through a lens 32 is defocused every time it passes an offset 22A, and it is necessary to perform focusing control so as to follow up the defocused state.

Accordingly, if offsets are provided at such different heights or at such distances that, although the focusing control can follow up the defocusing upon low-speed reproduction, the focusing control cannot follow up the defocusing upon high-speed reproduction, then high-speed reproduction can be limited.

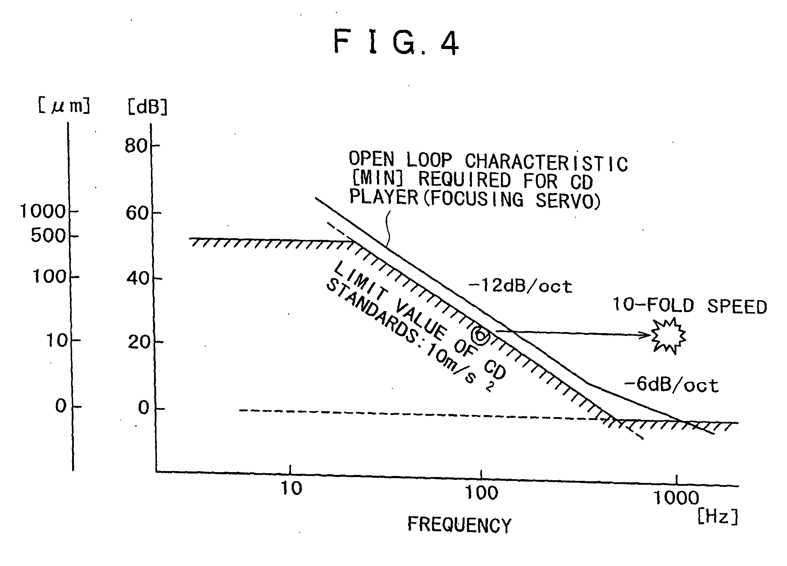

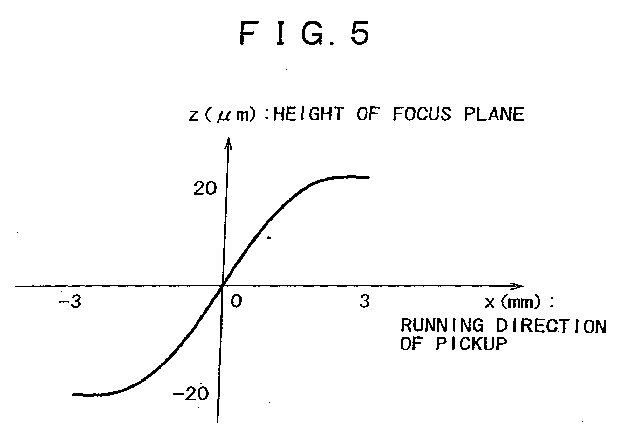

Fig. 4 illustrates a relationship between the reproduction speed and the focusing servo characteristic according to general CD standards. In Fig. 4, the axis of ordinate indicates a ratio (dB) of the defocused amount with respect to a tolerance therefor and the axis of abscissa indicates the frequency (Hz) of a reproduction signal. Meanwhile, Fig. 5 is a diagram showing a sectional shape at an offset 22A.

Referring to Figs. 4 and 5, an offset where the reproduction linear speed of a CD is 1.2 m/s and the frequency of the reproduction signal is 100 Hz is examined. When the optical pickup runs by 12 mm, a variation of 40 µm (± 20 µm) in the focusing direction is permissible (mark ⓞ). However, where any of CD-ROM drives popularized in the world is used, at a 10-fold speed, the frequency of the reproduction signal comes out of the range of an open loop characteristic (which differs among different products and cannot be determined unconditionally), resulting in failure in reproduction.

Further, the offsets 22A are formed with a sectional shape substantially proximate to a sine wave.

In the present embodiment, ten offsets 22A having a difference in height of 15 µm were formed to extend radially from the center of the disk.

For formation of the offsets, for example, the following two methods can be adopted.
(Method 1) After laser cutting of ordinary mastering, an offset pattern is formed by exposure with a mask before development. By the mask exposure, a pattern of pit trains and a pattern of offsets are formed on a resist film, and thereafter, development is performed. By insertion of such a process as just described, desired offsets can be provided on a stamper.
(Method 2) Offsets are provided on a glass disk by machine work in advance. Then, a negative type resist whose non-illuminated portion is dissolved by development upon laser cutting is used to provide offsets on a stamper.

A CD obtained in such a manner as described above was reproduced on an audio CD player. This proved that the CD can be reproduced without a trouble. However, when 20-fold speed reproduction of the CD was tried on a CD-ROM apparatus, the bit error rate exhibited an increase, and consequently, the original information was not successfully copied without a miss onto another medium.

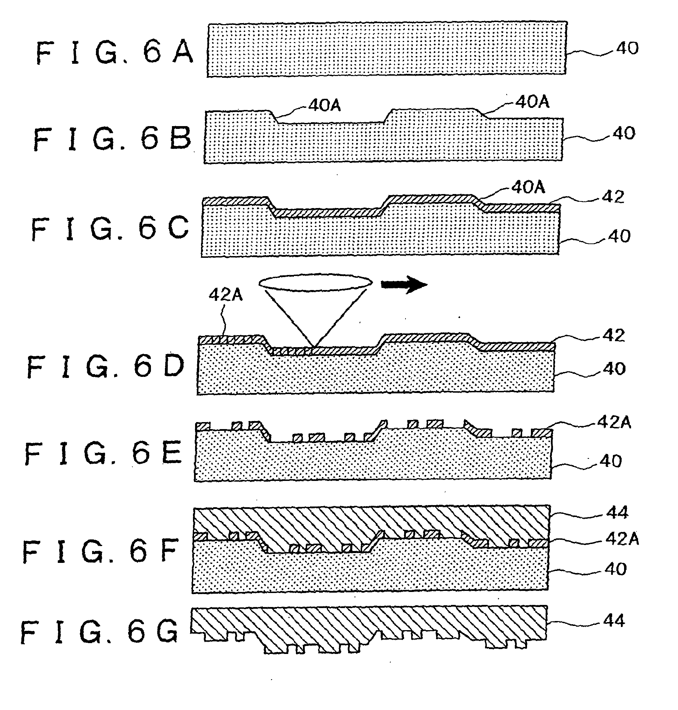

Figs. 6A to 6G are sectional views illustrating a stamper manufacturing process where the (Method 1) described above is used.

First, offsets 40A are formed on an upper face (disk molding face) of a glass disk (disk master) 40 by machine work or some other suitable means in Figs. 6A and 6B. Then, resist is applied in Fig. 6C, and pit trains 42A are successively formed on the resist film 42 by laser exposure in Fig. 6D.

Thereafter, development is performed in Fig. 6E, and copper plating and nickel plating are successively performed in Fig. 6F to form a stamper 44. Then, the stamper 44 is exfoliated from the glass disk thereby to complete the stamper (metal master) 44 in Fig. 6G.

It is to be noted that, while, in the present embodiment, the CD is so shaped that different information recording regions each in the form of a flat face are joined together with the offsets 22A, the shape of the information recording faces and the offsets may be such a serrated sectional shape that each of the information recording regions inclined gently as a whole exhibits a height returned to the original height for each step. For example, if the CD is formed such that each of the information recording faces extends gently downwardly as a whole and exhibits a sudden increase in height at each location of an offset, then upon reproduction of the disk, as viewed from the optical pickup, the focus becomes farther when an offset is passed and thereafter becomes gradually nearer, whereafter, when another offset is passed, the focus becomes farther. In other words, the focus changes over like (far - near) - (far - near) - (far - near).

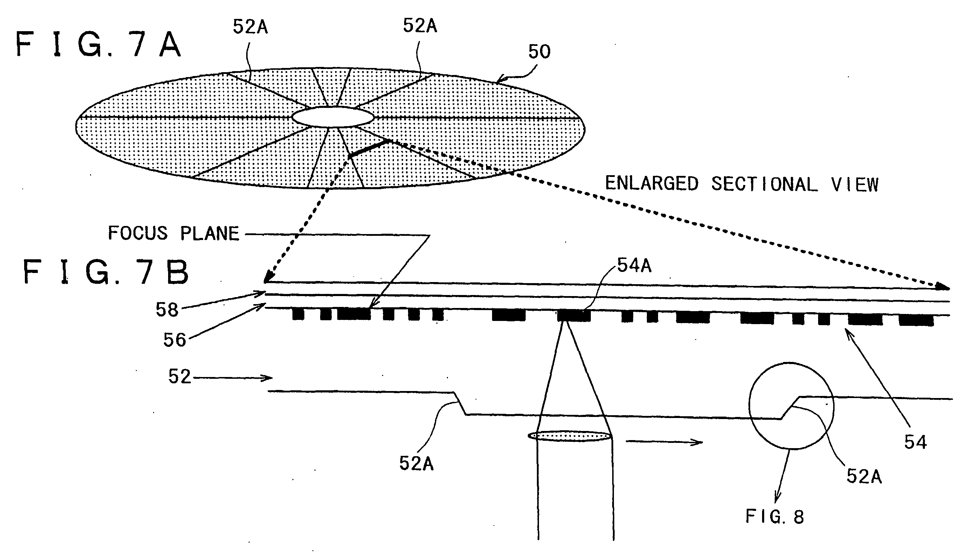

Fig. 7 is a schematic view showing a structure of a CD according to a third embodiment of the present invention, and Fig. 7A is a perspective view of an appearance of the CD and Fig. 7B is a sectional view of the CD.

In the CD 50 of Fig. 7A of the present embodiment, predetermined offsets 52A are provided in a circumferential direction of a disk substrate 52 on a face (readout face) of the disk substrate 52 on the opposite side to an information recording face such that high-speed reproduction of the CD 50 is limited depending upon a variation of the permeability.

It is to be noted that the CD 50 is configured such that an information recording face 54A including pit trains 54 is formed on a disk substrate 52, and a reflecting film 56 and a protective film 58 are successively formed on the information recording face 54A and a label face (not shown in Fig. 7) is formed on the protective film 58.

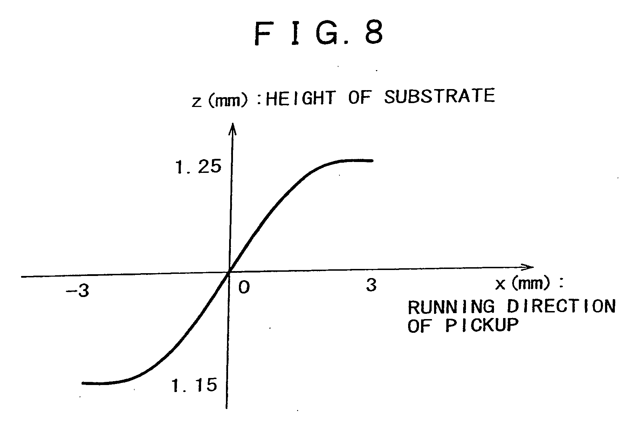

Fig. 8 is a diagram showing a sectional shape at an offset 52A. As seen in Fig. 8, the sectional shape of the offset 52A is substantially proximate to a sine waveform.

Such offsets 52A are provided radially from the center of the disk, for example, similarly as in the second embodiment described hereinabove. In the example shown in Fig. 8, the film thickness is 1.25 mm in a region wherein it is large, but is 1.15 mm in another region wherein it is small.

Where the refractive index of the transmission layer formed from the disk substrate 52 is represented by n and the offset 52A is represented by δz, a similar effect to that achieved where an offset 22A of δz × (n - 1) is formed on the information recording face side in the second embodiment described hereinabove can be anticipated.

Accordingly, if the refractive index n in the example of Fig. 8 is n = 1.5, then since δz is δz = (1.25 - 1.15), a similar effect to that achieved where an offset 22A of (1.25 - 1.15) × (1.5 - 1) mm, that is, 50 µm is provided can be anticipated.

The CD having such a configuration as described above was reproduced on an ordinary audio CD player. The reproduction proved that the CD was successfully reproduced without any trouble with the focus gain of 34 dB at the frequency of 80 Hz. However, when 20-fold speed reproduction was attempted on a CD-ROM apparatus, the focus gain was 34 dB at 1.6 KHz and the CD was not successfully reproduced.

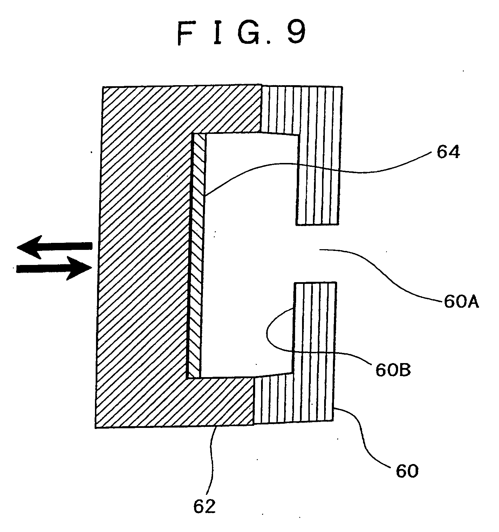

Fig. 9 is a sectional view showing an example of a molding die for manufacturing such a disk substrate 52 as described above.

The molding die shown includes a stationary mold 60 in which an inlet 60A into which synthetic resin is to be poured is provided, and a movable mold 62 disposed in an opposing relationship to the stationary mold 60. A stamper 64 is disposed in the inside of the movable mold 62 and is moved toward the stationary mold 60 side to perform molding of the disk substrate 52.

The stationary mold 60 has, formed on an inner peripheral face 60B thereof for molding the readout face side of the disk substrate 52, a concave and convex configuration (not shown) for forming the offsets 52A described hereinabove.

Where such a molding die as described above is used, a disk substrate having offsets thereon can be manufactured readily.

It is to be noted that, while, in the foregoing description, the disk type optical recording medium of the present invention is a CD, the present invention can be applied similarly also, for example, to a DVD or a like disk. Further, the contents are not limited to music information but may be image information.

Further, the shape of offsets to be provided on the information recording face or the readout face of a disk substrate is not limited to the examples described above. Further, the examples of particular numeric values specified in the embodiments described above are mere examples and do not restrict the present invention.

In other words, the present invention is not limited to the examples described above but can be suitably modified without departing from the spirit and scope of the present invention.

### Industrial Applicability

As described above, with the disk type optical recording medium according to the present invention, since the center of gravity and the center of rotation of the disk substrate are eccentric from each other, upon low-speed reproduction, stability of rotation can be maintained without being influenced by the eccentricity and follow-up control by the tracking control of the optical pickup is possible. However, upon high-speed reproduction of the disk type optical recording medium, the stability of the rotation cannot be maintained and the follow-up by the tracking control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the disk.type optical recording medium according to the present invention, the information recording face of the disk substrate is formed with an offset in a circumferential direction of the disk substrate. Therefore, upon low-speed reproduction, focusing control of the optical pickup is possible irrespective of the existence of the offset. However, upon high-speed reproduction of the disk type optical recording medium, the influence of a sudden variation of the focal position by the offset becomes so significant that the focusing control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Further, with the disk type optical recording medium according to the present invention, since the transmission layer of the disk substrate is formed with a film thickness which varies in a circumferential direction of the disk substrate, upon low-speed reproduction, focusing control of the optical pickup is possible irrespective of the influence of the variation of the film thickness of the transmission layer. However, upon high-speed reproduction of the disk type optical recording medium, the influence of a sudden variation of the film thickness becomes so significant that the focusing control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the reproduction limitation method for a disk type optical recording medium according to the present invention, since the center of gravity and the center of rotation of the disk substrate are made eccentric from each other, upon low-speed reproduction, stability of rotation can be maintained without being influenced by the eccentricity and follow-up control by the tracking control of the optical pickup is possible. However, upon high-speed reproduction of the disk type optical recording medium, the stability of the rotation cannot be maintained and the follow-up by the tracking control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Meanwhile, with the reproduction limitation method for a disk type optical recording medium according to the present invention, the information recording face of the disk substrate is provided with an offset in a circumferential direction of the disk substrate. Therefore, upon low-speed reproduction, focusing control of the optical pickup is possible irrespective of the existence of the offset. However, upon high-speed reproduction of the disk type optical recording medium, the influence of a sudden variation of the focal position by the offset becomes so significant that the focusing control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

Further, with the reproduction limitation method for a disk type optical recording medium according to the present invention, since the transmission layer of the disk substrate is formed with a film thickness which varies in a circumferential direction of the disk substrate, upon low-speed reproduction, focusing control of the optical pickup is possible irrespective of the influence of the variation of the film thickness of the transmission layer. However, upon high-speed reproduction of the disk type optical recording medium, the influence of a sudden variation of the film thickness becomes so significant that the focusing control of the optical pickup is disabled.

Accordingly, there is an advantage that reproduction of digital information recorded on a disk type optical recording medium, which has been conventionally processed by a player for exclusive use, by another disk drive can be limited to prevent illegal copying and so forth to achieve protection of digital contents without radically changing the specifications of recording information onto the disk type optical recording medium.

## Claims

1. A disk type optical recording medium wherein information tracks formed from pit trains to be read through tracking control and focusing control of an optical pickup are provided on an information recording face provided on a disk substrate, **characterized in that**
said disk substrate has a clamp hole to be mounted on a rotary shaft of a disk rotating apparatus and has a center of gravity eccentric by a predetermined amount with respect to the center of rotation of said disk substrate provided by said clamp hole.

2. A disk type optical recording medium according to claim 1, **characterized in that** said information recording face is formed on one face of said disk substrate and a reflecting face is provided on the outer side of said information recording face and besides a label face is provided on the outer side of said reflecting face such that said optical pickup reads the pit trains with spotlight having passed through said disk substrate.

3. A disk type optical recording medium according to claim 1, **characterized in that** said clamp hole is formed at a position of said disk substrate displaced from the center of said disk substrate to make the center of gravity of said disk substrate eccentric.

4. A disk type optical recording medium according to claim 2, **characterized in that** said disk substrate has a weight in the form of a thin film provided at one half or at part of said label face to make the center of gravity of said disk substrate eccentric.

5. A disk type optical recording medium according to claim 4, **characterized in that** said weight in the form of a thin film is made of coating material applied to said label face of said disk substrate.

6. A disk type optical recording medium according to claim 5, **characterized in that** said coating material contains metal powder so as to serve as the weight.

7. A disk type optical recording medium according to claim 2, **characterized in that** said disk substrate has a recessed portion in the form of a dot or a line provided at part of said label face to make the center of gravity of said disk plate eccentric.

8. A disk type optical recording medium according to claim 2, **characterized in that** said disk substrate has an offset at part of said label face to make the center of gravity of said disk substrate eccentric.

9. A disk type optical recording medium according to claim 1, **characterized in that** the eccentricity amount between the center of gravity and the center of rotation of said disk substrate is set to an eccentricity amount with which, upon predetermined low-speed reproduction, stable rotation of said disk substrate can be assured and stable follow-up control by said optical pickup is possible whereas, upon predetermined high-speed reproduction, the rotation of said disk substrate is less stabilized to disable follow-up control by said optical pickup.

10. A disk type optical recording medium wherein information tracks formed from pit trains to be read through tracking control and focusing control of an optical pickup are provided on an information recording face provided on a disk substrate, **characterized in that**
said information recording face of said disk substrate is formed with a predetermined offset in a circumferential direction of said disk substrate.

11. A disk type optical recording medium according to claim 10, **characterized in that** said information recording face is formed on one face of said disk substrate and a reflecting face is provided on the outer side of said information recording face and besides a label face is provided on the outer side of said reflecting face such that said optical pickup reads the pit trains with spotlight having passed through said disk substrate.

12. A disk type optical recording medium according to claim 11, **characterized in that** said information recording face of said disk substrate is formed at different height positions among a plurality of information recording regions divided in a circumferential direction of said disk substrate, and said pit trains are each formed to extend across said offset between said plurality of information recording regions.

13. A disk type optical recording medium according to claim 12, **characterized in that** said plurality of information recording regions are divided radially on said information recording face.

14. A disk type optical recording medium according to claim 10, **characterized in that** said offset of said information recording face are set to have an offset amount with which, upon predetermined low-speed reproduction, stable follow-up control by said optical pickup is possible whereas, upon predetermined high-speed reproduction, the focusing control by said optical pickup is less stabilized by the difference in height to disable the follow-up control.

15. A disk type optical recording medium wherein information tracks formed from pit trains to be read through tracking control and focusing control of an optical pickup are provided on an information recording face provided on a disk substrate, **characterized in that**
said information recording face is formed on one face of said disk substrate and a reflecting face is provided on the outer side of said information recording face while said disk substrate is formed as a transmission layer which introduces spotlight from said optical pickup to said pit trains, and that
said transmission layer of said disk substrate is formed with a film thickness which varies in a circumferential direction of said disk substrate.

16. A disk type optical recording medium according to claim 15, **characterized in that** the film thickness of said transmission layer varies in a waveform in the circumferential direction of said disk substrate.

17. A disk type optical recording medium according to claim 16, **characterized in that** the film thickness of said transmission layer is formed uniformly in a diametrical direction of said disk substrate.

18. A disk type optical recording medium according to claim 15, **characterized in that** the film thickness of said transmission layer varies with an offset interposed in the circumferential direction of said disk substrate.

19. A disk type optical recording medium according to claim 15, **characterized in that** the variation of the film thickness of said transmission layer is set to a shape with which, upon predetermined low-speed reproduction, stable follow-up control by said optical pickup is possible whereas, upon predetermined high-speed reproduction, the focusing control by said optical pickup is less stabilized by the difference in the film thickness to disable the follow-up control.

20. A reproduction limitation method for a disk type optical recording medium wherein information tracks formed from pit trains to be read through tracking control and focusing control of an optical pickup are provided on an information recording face provided on a disk substrate, **characterized in that**
the center of gravity of said disk substrate is made eccentric by a predetermined amount with respect to the center of rotation of said disk substrate such that, upon predetermined low-speed reproduction, stable rotation of said disk substrate can be assured and stable follow-up control by said optical pickup is possible whereas, upon predetermined high-speed reproduction, the rotation of said disk substrate is less stabilized to disable follow-up control by said optical pickup.

21. A reproduction limitation method for a disk type optical recording medium wherein information tracks formed from pit trains to be read through tracking control and focusing control of an optical pickup are provided on an information recording face provided on a disk substrate, **characterized in that**
said information recording face of said disk substrate is formed with a predetermined offset in a circumferential direction of said disk substrate such that, upon predetermined low-speed reproduction, stable rotation of said disk substrate can be assured and stable follow-up control by said optical pickup is possible whereas, upon predetermined high-speed reproduction, the follow-up control by said optical pickup is disabled by said offset.

22. A reproduction limitation method for a disk type optical recording medium wherein information tracks formed from pit trains to be read through tracking control and focusing control of an optical pickup are provided on an information recording face provided on a disk substrate, **characterized in that**
said disk substrate as a transmission layer which introduces spotlight from said optical pickup to said pit trains is formed with a film thickness which varies in a circumferential direction of said disk substrate such that, upon predetermined low-speed reproduction, stable rotation of said disk substrate can be assured and stable follow-up control by said optical pickup is possible whereas, upon predetermined high-speed reproduction, the follow-up control by said optical pickup is disabled by the variation of the film thickness of said transmission layer.

23. A method of manufacturing a disk type optical recording medium wherein information tracks formed from pit trains to be read through tracking control and focusing control of an optical pickup are provided on an information recording face provided on a disk substrate, **characterized in that**
an offset in a circumferential direction is formed in advance on a disk molding face of a disk master upon disk mastering of the disk type optical recording medium; that
a photo-resist film is provided on said disk molding face of said disk master and a pit pattern is formed on the photo-resist film; and that
the photo-resist film on which the pit pattern is formed is used to form a stamper.

24. A method of manufacturing a disk type optical recording medium wherein information tracks formed from pit trains to be read through tracking control and focusing control of an optical pickup are provided on an information recording face provided on a disk substrate, **characterized in that**,
upon molding of the information recording face of the disk substrate with a stamper disposed in a predetermined molding die, a molding face for forming an offset in a circumferential direction on a face of the disk substrate opposite to the information recording face is provided on said molding die such that a transmission layer of said disk substrate is formed in such a manner as to have a film thickness which varies in a circumferential direction of the disk substrate.
